# EUROPEAN PATENT APPLICATION

(11) **EP 2 020 525 A1**
(43) Date of publication of application: **04.02.2009**
(21) Application number: 08160855.6
(22) Date of filing: 22.07.2008
(51) Int. Cl.: F16D 65/22, F16D 65/14

(54) **Mechanical type brake-operating device**

(30) Priority: 23.07.2007 JP 2007190715
(71) Applicant: Nisshinbo Industries, Inc., Chuo-ku, Tokyo 103-8650 (JP)
(72) Inventor: Ikeda, Takashi, Gunma 370-0614 (JP)
(74) Representative: Bentz, Jean-Paul

(57) **Abstract**

To minimize the mechanical type brake-operating device, which can surely prevent the disengagement of the brake cable from the brake lever. The mechanical type brake-operating device is characterized in that the brake cable (40) has the clevis type cable end with the pair of facing cable end plates (42b), the connecting-pin (27) which connects the cable end and the free end of the brake lever (24) has the clip (30) at one end thereof for restricting the disengagement of the connecting-pin (27), and that the clip (30) is superposed to at least one of the pair of facing cable end plates (42b) of the cable end and fits on the cable end.

## Description

### FIELD OF INVENTION

The present invention relates to a mechanical type brake-operating device for drum brake devices.

### BACKGROUND OF THE INVENTION

The mechanical type brake-operating device for drum brakes has a mechanical operating mechanism, a brake cable, and a connecting-pin. The mechanical operating mechanism is comprised of a brake lever, a strut that pivotally and rotatably supports the brake lever inside of two facing plates thereof, and a pivot pin. This mechanical operating mechanism is arranged between a pair of brake shoes and is designed to spread the brake lever and the strut apart from each other while the brake lever rotates relative to the strut as pulling the brake cable that is connected to the brake lever via the connecting-pin.

Then, when connecting the brake cable and the brake lever, after inserting the connecting-pin into connecting-holes of the brake cable and the brake lever that are exposed outside from an opening of the strut, a clip that is bent in an almost C-shape fits on the strut to engage the concavities formed on both internal side-surfaces of the clip with the convexities formed on both external side-surfaces of the strut. Accordingly, the clip fitting on the strut is structured to define a position of the brake lever at a space inside of the strut as restricting a rotation of the brake lever within a certain range so as to prevent a disengagement of the connecting-pin from the brake lever and the brake cable. Refer to paragraphs [0015] and [0016], and FIGS. 2 - 4 of the following Patent Document 1.

Furthermore, instead of the above-described structure, a unit type structure has been proposed, in which the clip is rotatably mounted on the strut. Refer to paragraphs [0020] - [0023], and FIGS. 5 - 8 of the following Patent Document 1.

[Patent Document 1] Japanese Unexamined Patent Publication No. 2001-349360 (Pages 4 and 5, FIGS. 2 - 8.)

The invention disclosed in the Patent Document 1 has the following problems.<A> The clip has to be designed wider so as to fit on an exterior of the strut. This design increases the material cost of the clip, and further fitting means to prevent the disengagement of the clip from the strut are arranged and formed on both the clip and the strut, which increase the manufacturing cost of both clip and strut.<B> The unit type structure, in which the clip is rotatably mounted on the strut, has to provide rotational axes on both external side-surfaces of a pair of facing plates of the strut additionally, which increase the manufacturing cost of the strut.<C> Notches are formed on both pair of facing plates of the strut, which reduce the rigidity of the strut. Especially, the brake that requires the overall height thereof to be low necessarily makes the depth of the notches deeper as lowering a bridge of the strut, which reduces the rigidity of the strut.<D> When fitting the clip on the strut, the side plates of the clip are forced to spread apart; the clip is maintained open until the side plate proceeds at the external side-surfaces of the pair of facing plates of the strut; and the clip is needed to fit on the strut as adjusting the concavities of the clip with the convexities at both external side-surfaces of the strut, which makes fitting the clip difficult.<E> An allowable rotational range of the brake lever is restricted to a point of abutment with the clip, and therefore an effective operational range (operating stroke) of the brake lever is small, which makes an increase of a lever ratio difficult.<F> In order to prevent a disengagement of the connecting-pin from the brake lever, the entire length of the connecting-pin has to be extended, and the internal width of the strut (a distance between both pair of facing plates of the strut), which relates to the length of the connecting-pin, has to be strictly restricted.

The present invention was made in consideration of the above-descriptions, and an object thereof is to provide a mechanical type brake-operating device that can minimize the size of the entire device and reduce the parts cost. Another object of the present invention is to provide a mechanical type brake-operating device that does not adversely effect the strength and/or manufacturing accuracy of the strut. Yet another object of the present invention is to provide a mechanical type brake-operating device that can easily secure an effective operational range (operating stroke) of the brake lever. Finally, another object of the present invention is to provide a mechanical type brake-operating device that can reduce the number of steps in the assembling process by improving the operability of engaging the connecting-pin and fitting the clip.

### SUMMARY OF THE INVENTION

To attain the above-objects, the mechanical type brake-operating device of this invention comprises a mechanical brake operating mechanism, the mechanical brake operating mechanism that includes a strut, which is composed of a pair of facing plates, and a brake lever, which is positioned between the facing plates of the strut and has an end pivotally and rotatably supported with the strut; a brake cable, the brake cable including a cable end, which has a proximal portion jointing a pair of facing cable end plates and a neck integrally formed with the proximal portion, and an inner cable, which is fixed to the cable end at the neck; and a connecting-pin, which connects a free end of the brake lever and the cable end, the mechanical type brake-operating device spreads the brake lever and the strut apart from each other while the brake lever rotates relative to the strut when the brake cable is pulled, wherein a clip, which restricts a disengagement of the connecting-pin from the cable end, is fixed to the connecting-pin at an end thereof, and the clip is superposed at least on one of the pair of facing cable end plates of the cable end and fits on the cable end.

Also, for the above-described mechanical type brake-operating device, this invention can be arranged so that the clip has a proximal portion which is fixed to the connecting-pin and an engagement portion which is extended from one end of the proximal portion so as to engage with one of the pair of facing cable end plates of the cable end.

Furthermore, for the above-described mechanical type brake-operating device, this invention can be arranged such that the clip has a proximal portion which is fixed to the connecting-pin and an engagement portion which is extended from one end of the proximal portion so as to engage with the neck of the cable end.

The present invention has the following advantages.<A> The small size clip, which is fixed on the connecting-pin, fits on the cable end, which reduces the material cost of the clip and reduces the manufacturing cost by eliminating the requirement of an additional process for forming the convexities or concavities on the strut of the mechanical type brake-operating device as the disengagement preventive means.<B> Notches are not necessarily formed on both pair of facing plates of the strut, which prevents the deterioration of the rigidity of the strut.<C> A simple single operation of insertion of the connecting-pin performs both the connecting operation of the brake lever and the cable end via the connecting-pin and the fitting operation of the clip on the cable end. Therefore, compared to the situation of separate installation of the connecting-pin and fitting of the clip, the present invention reduces the number steps in the assembling process, which increases the operability of connecting the brake cable and the brake lever.<D> The allowable rotational range of the brake lever is not restricted by the clip or the resilient member, which can secure a larger effective operational range (operating stroke) of the brake lever.<E> The clip fitting on the cable end constrains the connecting-pin movement, which does not need to be strictly restricted to the internal width of the strut, as is the case with the conventional means.<F> The clip is integrally formed on the connecting-pin, which facilitates parts supply management compared to when managing individual parts.

### BRIEF DESCRIPTION OF THE DRAWINGS

The above and other objects of the present invention will become readily apparent by reference to the following detailed description when considered in conjunction with the accompanying drawings wherein:

FIG. 1 is a plan view of an example of the drum brake device equipped with the mechanical type brake-operating device relating to the first embodiment of the present invention;

FIG. 2 is a sectional view of FIG. 1 taken along the line II-II;

FIG. 3 is a sectional view of FIG. 1 taken along the line III-III;

FIG. 4 is a exploded perspective view of the mechanical type brake-operating device relating to the first embodiment of the present invention;

FIG. 5(A) is a partially omitted longitudinal-sectional view explaining the assembling operation of the connecting-pin and the clip in the mechanical type brake-operating device relating to the first embodiment;

FIG. 5(B) is a partially omitted cross-sectional view of the mechanical type brake-operating device;

FIG. 6 is a partially broken perspective view of the connecting-pin and the clip used in the first embodiment;

FIG. 7 is a partially omitted cross-sectional view of the mechanical type brake-operating device relating to the second embodiment of the present invention;

FIG. 8 is a partially omitted cross-sectional view of the mechanical type brake-operating device explaining the assembling process of the connecting-pin and the clip to the mechanical type brake-operating device relating to the second embodiment;

FIG. 9 is a perspective view of the clip used in the second embodiment;

FIG. 10 is a partially omitted cross-sectional view of the mechanical type brake-operating device relating to the third embodiment;

FIG. 11 is a partially omitted cross-sectional view of the mechanical type brake-operating device explaining the assembling process of the connecting-pin and the clip to the mechanical type brake-operating device relating to the third embodiment; and

FIG. 12 is a perspective view of the clip used in the third embodiment.

### DETAILED DESCRIPTION OF THE PREFERRED EMBODIMENT

The mechanical type brake-operating device relating to the present invention will be explained next.

### <First Embodiment>

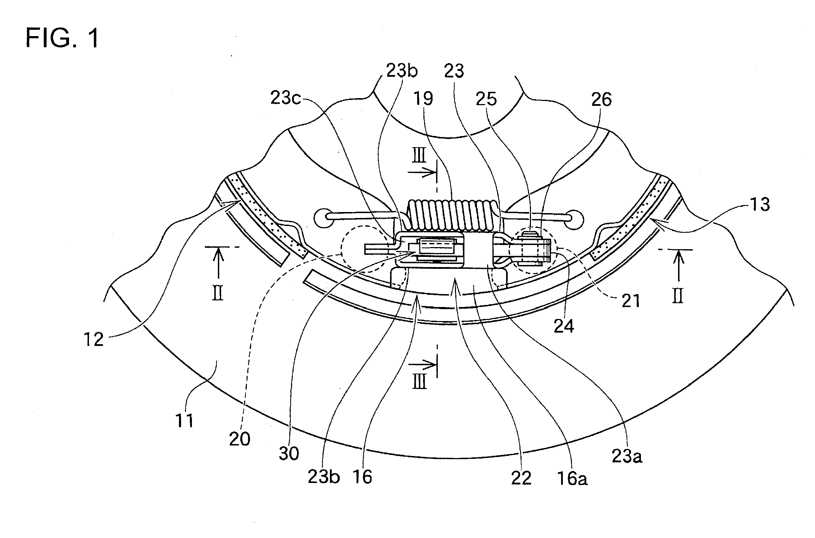

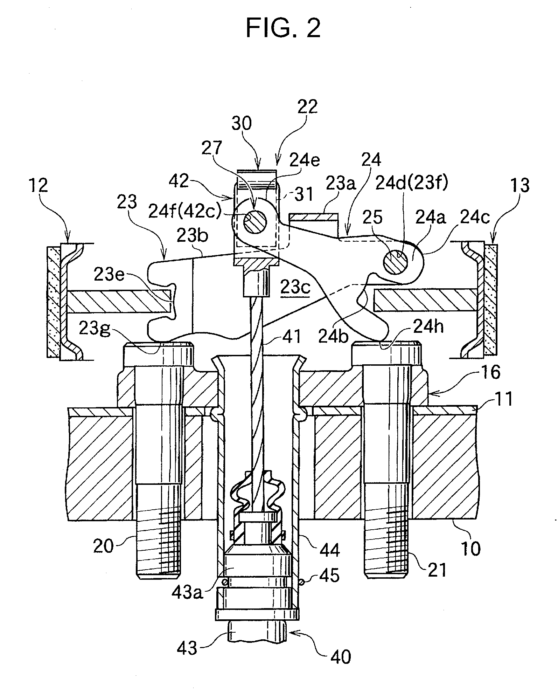

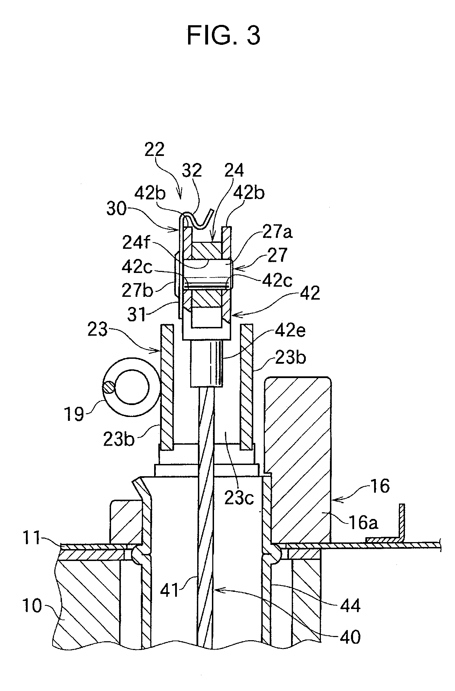

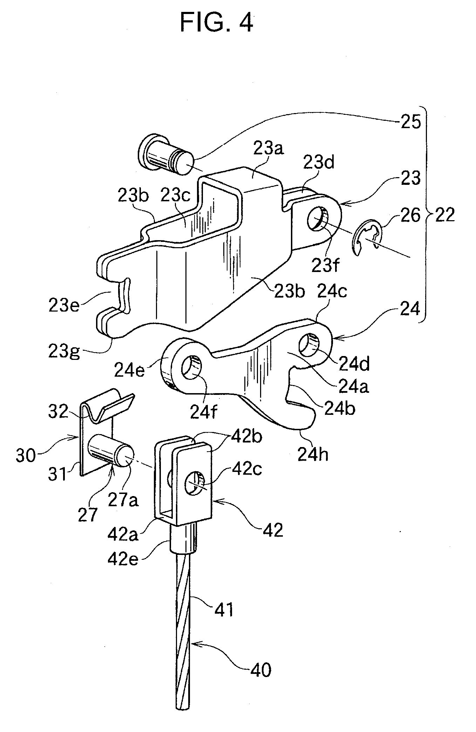

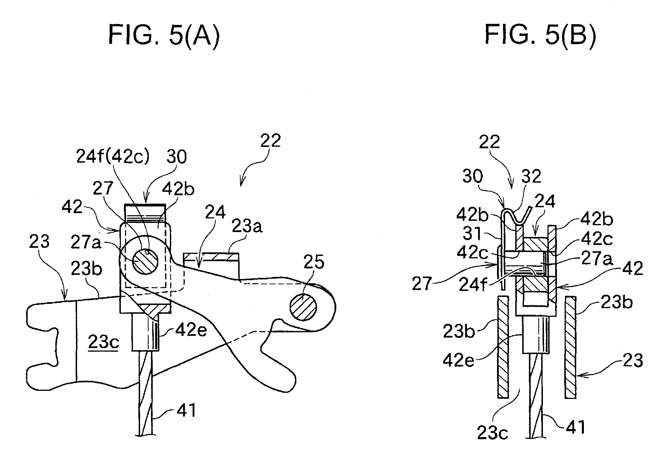

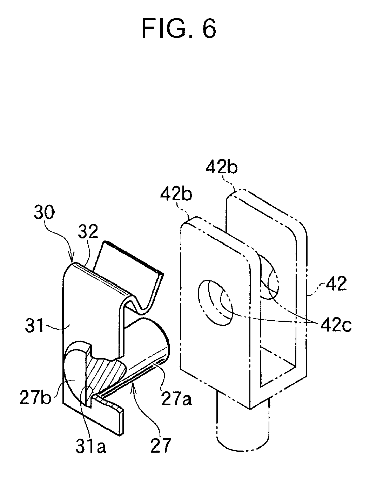

The mechanical type brake-operating device relating to a first embodiment will be explained with reference to FIGS. 1 - 6. FIG. 1 is a plan view of an example of the drum brake equipped with the mechanical type brake-operating device; FIG. 2 is a longitudinal-sectional view of the FIG. 1 around the mechanical type brake-operating device; FIG. 3 is a cross-sectional view of FIG. 1; FIG. 4 is an exploded perspective view of the mechanical type brake-operating device; FIG. 5 is a view illustrating an assembling operation of the clip in the mechanical type brake-operating device; and FIG. 6 is a partially broken perspective view of the member after integration of the connecting-pin and the clip.

A pair of brake shoes 12 and 13 are movably mounted on a back plate 11, which is fixed on a stationary part 10 of a vehicle, by means of a shoe-hold mechanism (not shown in the figures), and a pair of one adjacent ends thereof are supported with a later-described raised portion 16a of an anchor 16 while a pair of the other adjacent ends (not shown in the figures) are linked via a connecting member. A pair of shoe-return springs (only one shoe-return spring 19 is shown in the figures) extended between the brake shoes 12 and 13 maintain the abutment of both brake shoes 12 and 13 against the connecting member and the anchor 16.

A mechanical operating mechanism 22, which spreads the pair of one adjacent ends of brake shoes 12 and 13 apart, is positioned adjacent to the raised portion 16a of the anchor 16 and between brake shoes 12 and 13.

The mechanical operating mechanism 22 is comprised of a strut 23, a brake lever 24, a pivot pin 25, and a retaining washer 26.

The strut 23, which is a component of the mechanical operating mechanism 22, is formed from a metal plate. The plate is bent in a C shape in order to form a bridge 23a at an intermediate position between both ends of the strut 23 in a longitudinal direction and facing plates 23b, 23b. Furthermore, a pair of one end side portions of the facing plates 23b, 23b are superposed to be fixed such as by welding, and a wide space 23c is formed at an intermediate position between the both ends of the strut 23 in a longitudinal direction while a narrower space 23d is formed toward the other end side portions of the facing plates 23b, 23b. A shoe-engagement groove 23e is formed in the superposed portion of the facing plates 23b, 23b at one side thereof, and pivot holes 23f, 23f are formed at the other side thereof.

The bridge 23a, which is extending between upper portions of the facing plates 23b, 23b, closes one portion of the wide space 23c. The bridge 23a and the brake lever 24, until an entire connecting-hole 24f formed at a free end 24e of the brake lever 24 is exposed outside from the wide space 23c of the strut 23, is designed such that the brake lever 24 does not abut against the bridge 23a.

The brake lever 24, which is a component of the mechanical operating mechanism 22, is formed from a metal plate. A proximal portion 24a of the brake lever 24, which is positioned in the space 23c and 23d of the strut 23 and sandwiched between the facing plates 23b and 23b, is pivotally and rotatably supported via the pivot pin 25. A shoe-engagement groove 24b is formed at the proximal portion 24a, and a pivot hole 24d, through which the pivot pin 25 penetrates, is formed at one projection 24c that shapes the shoe engagement groove 24b.

The brake lever 24 is pivotally and rotatably supported with the strut 23 by penetrating the pivot pin 25 through the pivot holes 23f, 24d, 23f of the strut 23 and the brake lever 24 and fitting the retaining washer 26 at an end of the pivot pin 25.

The connecting-hole 24f is formed at the free end 24e of the brake lever 24 and is designed to connect a clevis-shaped cable end 42 fixed at an end of an inner cable 41, which is a component of a later-described brake cable 40, to the brake lever 24 via a connecting-pin 27.

The strut 23 and the brake lever 24 are such that each of a projection 23g and a projection 24h at a cable operating direction side slidably abuts against the top of the heads of installation bolts 20, 21 shown in FIG. 2.

The brake cable 40 will be explained next. The brake cable 40 is comprised of the inner cable 41 and an outer casing 43, and the cable end 42 for connecting to the brake lever 24 is fixed at the end of the inner cable 41 while the outer casing 42 has a casing cap 43a, which can be fit in a guide pipe 44 fixed on the anchor 16.

The cable end 42 is comprised of a neck 42e to be fixed to the inner cable 41, a proximal portion 42a integrally formed from the neck 42e, and a pair of facing cable end plates 42b and 42b standing from the proximal portion 42a, and the connecting-holes 42c, 42c are formed to face each other at the pair of facing cable end plates 42b and 42b.

The present invention, by utilizing a unit of pre-integrated members, i.e., the connecting-pin 27 for connecting the clevis-shaped cable end 42 to the brake lever 24 and a clip 30 for preventing the disengagement of the connecting-pin 27, enables a simultaneous connecting process for the brake lever 24 and the brake cable 40 via the connecting-pin 27 and an installation process of the clip 30 to the cable end 42. The connecting-pin 27 is a member to connect the brake cable 40 to the brake lever 24, and the clip 30 is a member to restrict the disengagement of the connecting-pin 27 after connecting the cable end 42 to the brake lever 24 by fitting on one portion of the cable end 42.

The unit of the integrated connecting-pin 27 and clip 30 used in this embodiment will be explained with reference to FIG. 4 and FIG. 6. Also, in FIG. 6, the cable end 42 of the brake cable 40, which engages with the connecting-pin 27 and the clip 30, is shown by an imaginary line. The clip 30 of this embodiment is formed by bending a steel strip sheet for leaf springs and has a flat proximal portion 31 fixed on one end of the connecting-pin 27 and an engagement portion 32 formed by making an extending portion extending from one end of the proximal portion 31 and bending and folding the extending portion so that the width of the engagement portion 32 fits on the end of one facing cable end plate 42b of the cable end 42.

The engagement portion 32 is resilient so as to hold one facing cable end plate 42b resiliently. An object of folding an end of the engagement portion 32 slantingly is to provide smooth assembling operation of the clip 30 as fitting the clip 30 on the cable end 42 simply by pushing the connecting-pin 27, thereby providing smooth assembling operation of the clip 30.

The connecting-pin 27 that connects the cable end 42 with the brake lever 24, while the engagement portion 32 of the clip 30 fitting on the end of one facing cable end plate 42b, projects from the clip 30 to be inserted through each connecting-holes 42c, 24f, 42c of the cable end 42 and the brake lever 24 from the side of the cable end 42.

A fixing means of the connecting-pin 27 which has a stem 27a and a large diameter flange 27b, and the clip 30, as shown in FIG. 6, is explained such that a serration is formed on the stem 27a of the connecting-pin 27 at a side of the flange 27b and is pressed into the connecting-hole 31a formed in the proximal portion 31 of the clip 30. An object of forming the serration is to avoid a decrease of a sliding-efficiency between the connecting-holes 42c and the connecting-pin 27 by causing scratches on the stem 27a when press-fitting the connecting-pin 27 in the connecting-hole 31a. Publicly known welding, bonding, or the like may be used instead of the press-fitting. The clip 30 functions to restrict the movement of the connecting-pin 27 after fitting the same, and no large external force is applied to the fitting portion with the connecting-pin 27; therefore, only a small fixing strength is necessary thereat.

A connecting process of the brake cable will be explained next. In FIG. 2 and FIG. 3, the inner cable 41 is inserted into the guide pipe 44 by hand, and the cable end 42 passes through the wide space 23c of the strut 23 to reach the free end 24e of the brake lever 24. The free end 24e is positioned between the pair of facing cable end plates 42b and 42b of the cable end 42, and the free end 24e is pushed up until the connecting hole 24f is exposed outside from the wide space 23c of the strut 23 entirely.

Each connecting-hole 42c, 24f, 42c is aligned to insert the connecting-pin 27, integrally fixed on the clip 30, from the side of the cable end 42 to connect the cable end 42 to the brake lever 24, and at the same time, the clip 30 fits on one facing cable end plate 42b.

The fitting process of the clip 30 is explained in detail where the connecting-pin 27 is inserted into the cable end 42 from the side of the cable end 42 when the cable end 42 is exposed outside from the wide space 23c of the strut 23, as shown in FIG. 5, thereby pressing the slant of the engagement portion 32 of the clip 30 integrated with the connecting-pin 27 against the top of one facing cable end plate 42b. When the connecting-pin 27 is further pushed, as the clip 30 is resiliently deformed, the slant slides on the top of one facing cable end plate 42b. When the engagement portion 32 proceeds over the top of one facing cable end plate 42b, the engagement portion 32 returns to an approaching direction toward the proximal portion 31 due to a resilient returning force preserved in the clip 30, thereby fitting the clip 30 on one facing cable end plate 42b. The engagement portion 32, which is integrated with the connecting-pin 27, fits on the one facing cable end plate 42b, which restricts the disengagement of the connecting-pin 27 integrated with the clip 30 and maintains the connection between the cable end 42 and the brake lever 24.

Finally, the casing cap 43a of the outer casing 43 fits in the other end of the guide pipe 44 and is fixed by a stop ring 45 (as shown in FIG. 2).

As shown in FIG. 2, the clip 30 fitting on the cable end 42, regardless of the rotational position of the brake lever 24, prevents the disengagement of the connecting-pin 27, and therefore the brake lever 24 rotates clockwise, and even if the position of the connecting-pin 27 becomes exposed outside from the wide space 23c of the strut 23, the connecting-pin 27 does not slip out of the connecting holes 42c, 24f, 42c and the cable end 42 is not physically disengaged from the brake lever 24. Also, even if the brake lever 24 rotates in the strut 23, the clip 30 does not interfere with the strut 23. Accordingly, the brake lever 24 is capable of rotating clockwise until a side surface thereof abuts against the bridge 23a of the strut 23, which allows to secure a larger allowable rotational range of the brake lever 24, compared to when a conventional clip is fitting on the conventional strut. The larger allowable rotational range of the brake lever 24 secures the necessary effective operational range (operating stroke) of the brake lever 24 easily.

Also, when releasing the connection between the cable end 42 and the brake lever 24 when exchanging the brake cable 40 and the like is necessary, following the reverse processes as described above, the cable end 42 is exposed outside from the wide space 23c of the strut 23, and the clip 30 is disengaged. The engagement between the clip 30 and the facing cable end plate 42b is released, and the connecting-pin 27 can easily be removed.

As such, in the present invention, simply by inserting the connecting-pin 27, the brake cable 40 can be connected to the brake lever 24 via the connecting-pin 27. In addition, the clip 30 can fit on the brake cable 40 simultaneously, thereby greatly improving the operability of connecting the brake cable 40 and the brake lever 24. Additionally, a hammering noise, which is generated when the engagement portion 32 of the clip 30 proceeds over one facing cable end plate 42b of the cable end 42, can be used to check the completion of the assembling process of the clip 30 and connecting process of the connecting-pin 27.

The clip 30 resiliently fits on the cable end 42 and the entire width thereof engages with the cable end 42 at the same time, which prevents the lateral displacement, and therefore the clip 30 does not make a rattle movement when transporting the drum brake device as well as while driving the vehicle.

### <Second Embodiment>

Other embodiment will be explained next, and common elements as described in the first embodiment will have the same reference numbers and the detailed explanation of which will be omitted. Also, illustrations of the strut and the surrounding elements will be partially omitted simply because of convenience.

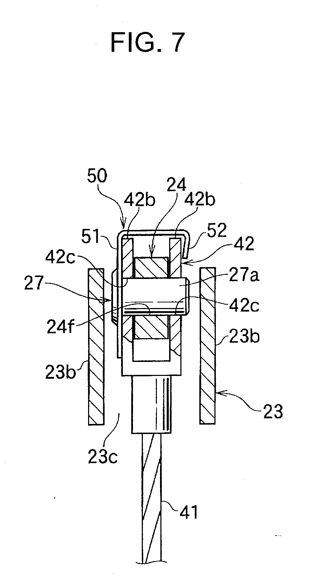

Based on FIGS. 7 - 9, the mechanical type brake-operating device according to the second embodiment will be explained, in which an engagement portion 52 of a clip 50, which maintains the connection between the brake lever 24 and the brake cable 40 via the connecting-pin 27, fits on the other facing cable end plate 42b of the cable end 42 after proceeding over one facing cable end plate 42b.

The clip 50, which is integrated with the connecting-pin 27 to be used in this embodiment, has a proximal portion 51, where the connecting-pin 27 is fixed and that can be superposed on one facing cable end plate 42b, and the engagement portion 52 which is integrally formed with the proximal portion 51 and is engageable with the other facing cable end plate 42b.

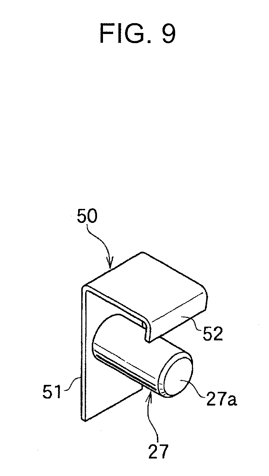

The clip 50 formed by bending a steel strip sheet for leaf springs in an almost C-shape (almost L-shape) is explained concretely with reference to the perspective view of FIG. 9. The clip 50 is formed by bending the proximal portion 51 at near right angle at an intermediate portion thereof so as to stride over the external width of both facing cable end plate 42b, 42b and by bending one end of the proximal portion 51 so as to form the engagement portion 52. The engagement portion 52 can fit on the other facing cable end plate 42b, and the one end thereof is bent to face inside of the clip 50 at an acute angle so as to slide over the top of the pair of facing cable end plates 42b and 42b smoothly. One portion of the proximal portion 51 where the connecting-pin 27 is fixed and the engagement portion 52 have resiliency so as to hold the pair of cable end plates 42b and 42b resiliently.

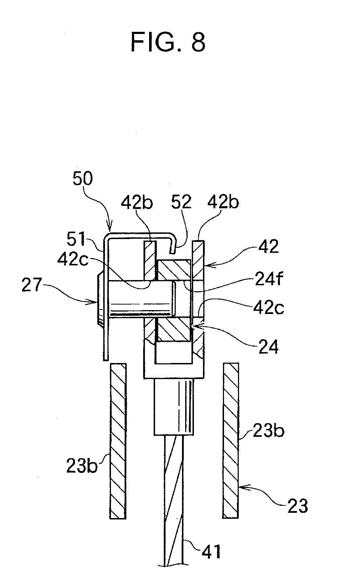

A connecting process of the brake cable in this embodiment will be explained next. As shown in FIG. 8, in this embodiment, while aligning each connecting-holes 42c, 24f, 42c, the connecting-pin 27 is inserted from the side of the cable end 42 to connect the brake lever 24 and the cable end 42, and the clip 50 fits on the cable end 42. A basic connecting operation of the brake cable in this embodiment is the same as the above-described first embodiment except for the engagement position of the engagement portion 52 of the clip 50 relative to the cable end 42.

That is, in this embodiment, by pushing the connecting-pin 27 from the side of the cable end 42, the slant of the engagement portion 52 of the clip 50 integrated with the connecting-pin 27 proceeds over each top of one facing cable end plate 42b and the other facing cable end plate 42b, and the engagement portion 52 fits on the other facing cable end plate 42b (see FIG. 7).

In this embodiment, as in the previous first embodiment, the engagement portion 52 of the clip 50 integrated with the connecting-pin 27 fits on the other facing cable end plate 42b, and therefore the disengagement of the connecting-pin 27 integrated with the clip 50 is restricted in order to maintain the connection between the cable end 42 and the brake lever 24.

### <Third Embodiment>

In the above-described first and the second embodiments, the engagement portions 32, 52 formed as extending from the proximal portions 31, 51 of the clips 30, 50 directly fit on one facing cable end plate 42b or the other facing cable end plate 42b.

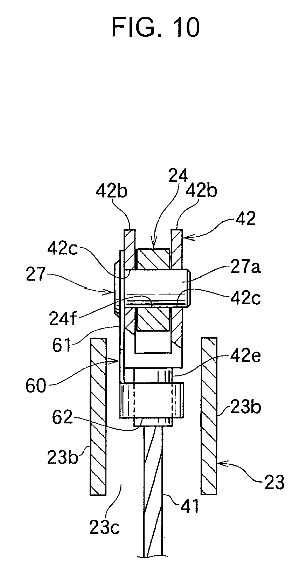

Based on FIGS. 10 - 12, the mechanical type brake-operating device according to the third embodiment will be explained, in which engagement portions 62, 62 of a clip 60, which maintains the connection between the brake lever 24 and the brake cable 40 via the connecting-pin 27, fit on the neck 42e of the cable end 42.

The clip 60, which is integrated with the connecting-pin 27 used in this embodiment, is formed by bending a steel strip sheet for leaf springs just like the above described first and second embodiments. The clip 60 has the proximal portion 61 to which the connecting-pin 27 is fixed and that can be superposed on one facing cable end plate 42b of the cable end 42, and the engagement portions 62, 62 which are integrally formed with the proximal portion 61 and is engageable with the neck 42e as holding the neck 42e.

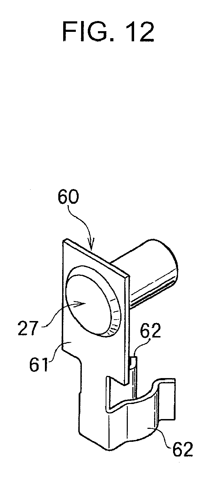

The clip 60 is explained concretely with reference to the perspective view of FIG. 12. The engagement portions 62, 62 of the clip 60 are formed at one end (lower end) of the proximal portion 61 so that one pair of small pieces of an almost T-shaped extending portion extending in the longitudinal direction is bent in an arc shape. The pair of engagement portions 62 and 62 are designed to resiliently hold the neck 42e, and both ends thereof are bent to fold outward for smooth fitting on the neck 42e.

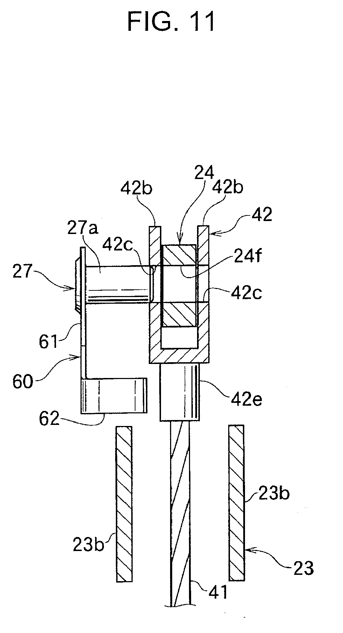

A connecting process of the brake cable in this embodiment will be explained next. As shown in FIG. 11, in this embodiment, while aligning each connecting-holes 42c, 24f, 42c, the connecting-pin 27 is inserted from the side of the cable end 42 to connect the brake lever 24 and the cable end 42, and the clip 60 fits on the cable end 42. A basic connecting operation of the brake cable in this embodiment is the same as the above-described first and second embodiments except for the engagement positions of the engagement portions 62, 62 of the clip 60 relative to the cable end 42.

That is, in this embodiment, by pushing the connecting-pin 27 from the side of the cable end 42, the end folded outward of the releasing side of the engagement portions 62, 62 of the clip 60 integrated with the connecting-pin 27 are fit on the neck 42e from the side of the neck 42e so that the pair of engagement portions 62 and 62 resiliently fit on the neck 42e (see FIG. 10).

In this embodiment, as in the previous first and second embodiments, the pair of engagement portions 62 and 62 of the clip 60 are integrated with the connecting-pin 27 and fit on the neck 42e, and therefore the disengagement of the connecting-pin 27 integrated with the clip 60 is restricted to maintain the connection between the cable end 42 and the brake lever 24.

Also, the above-described clips 30, 50, 60 of the present inventions are not limited to steel for springs and can be such as plastic clips.

### [Explanation of the Reference Numbers]

10. Stationary Part of a Vehicle Body11. Back Plate12, 13 Brake Shoe16. Anchor16a. Raised Portion19. Shoe-Return Spring20, 21 Installation Bolt22. Mechanical Operating Mechanism23. Strut23. Bridge23b. Facing Plate23c. Wide Space23d. Narrow Space23e. Shoe-Engagement Groove23f. Pivot Hole23g. Projection24. Brake Lever24a. Proximal Portion24b. Shoe-Engagement Groove24c. Projection24d. Pivot Hole24e. Free End24f. Connecting-Hole24h. Projection25. Pivot Pin26. Stop Washer27. Connecting-Pin27a. stem27b. Flange30, 50, 60. Clip31, 51, 61. Proximal Portion32, 52, 62. Engagement Portion40. Brake Cable41. Inner Cable42. Cable End42a. Proximal Portion42b. Facing Cable End Plate42c. Connecting-Hole42e. Neck43. Outer Casing43a. Cashing Cap44. Guide Pipe45. Stop Ring

## Claims

1. A mechanical type brake-operating device, comprising:
(a) a mechanical operating mechanism (22), said mechanical operating mechanism including
(1) a strut (23) composed of a pair of facing plates (23b, 23b), and
(2) a brake lever (24), which is positioned between the facing plates of the strut and has a proximal portion (24a) pivotally and rotatably supported with the strut;
(b) a brake cable (40), said brake cable including
(1) a cable end (42), which has a proximal portion (42a) jointing a pair of facing cable end plates (42b, 42b) and a neck (42e) integrally formed with the proximal portion, and
(2) an inner cable (41), which is fixed to the cable end at the neck; and
(c) a connecting-pin (27), which connects a free end (24e) of the brake lever and the cable end, said mechanical type brake-operating device spreads the brake lever and the strut apart from each other while the brake lever rotates relative to the strut when the brake cable is pulled, **characterized in that**
a clip (30; 50; 60), which restricts a disengagement of the connecting-pin from the cable end, is fixed to said connecting-pin at an end thereof, and
said clip is superposed at least on one of the pair of facing cable end plates of the cable end and fits on the cable end.

2. The mechanical type brake-operating device according to Claim 1, **characterized in that**
said clip (30; 50) has a proximal portion (31; 51) which is fixed to the connecting-pin and an engagement portion (32; 52) which is extended from one end of the proximal portion so as to engage with one of the pair of facing cable end plates of the cable end.

3. The mechanical type brake-operating device according to Claim 1, **characterized in that**
said clip (60) has a proximal portion (61) which is fixed to the connecting-pin and an engagement portion (62) which is extended from one end of the proximal portion so as to engage with the neck of the cable end.
